# EUROPEAN PATENT APPLICATION

(11) **EP 4 838 209 A1**
(43) Date of publication of application: **11.11.2026**
(21) Application number: 26177551.4
(22) Date of filing: 08.05.2026
(51) Int. Cl.: G01N 23/04

(54) **SYSTEMS AND METHODS TO AUTOMATICALLY DEVELOP DIGITAL RADIOGRAPHY TECHNIQUES**

(30) Priority: 09.05.2025 US 202563803222 P; 05.05.2026 US 202619668444
(71) Applicant: Illinois Tool Works Inc., Glenview IL 60025 (US)
(72) Inventor: LEMMER, Camaron, Glenview, 60025 (US); COUGHLIN, Shaun, Glenview, 60025 (US)
(74) Representative: HGF

(57) **Abstract**

Disclosed example digital radiography systems include: a radiation detector configured to generate a digital image based on incident radiation; a radiation emitter configured to emit radiation toward the radiation detector; a stage configured to hold a radiography specimen; and control circuitry configured to: automatically determine one or more parameters for control of one or more of the radiation emitter or the radiation detector, the one or more parameters being automatically determined based on a characteristic of the radiography specimen and an image of an image quality indicator; and control the radiation detector and the radiation emitter to generate a digital radiograph of the radiography specimen based on the one or more parameters.

## Description

### RELATED APPLICATIONS

The present application claims the benefit of U.S. Patent Application Serial No. 63/803,222, filed May 9, 2025, entitled "SYSTEMS AND METHODS TO AUTOMATICALLY DEVELOP DIGITAL RADIOGRAPHY TECHNIQUES." The entirety of U.S. Patent Application Serial No. 63/803,222 is expressly incorporated herein by reference.

### TECHNICAL FIELD

The present disclosure generally relates to industrial radiography systems and, more particularly, to systems and methods to automatically develop digital radiography techniques.

### BACKGROUND

X-ray radiography is sometimes used to inspect parts used in industrial applications, such as, for example, aerospace, automotive, electronic, medical, pharmaceutical, military, and/or defense applications. Parts may be rotated in order to perform radiography scans at different angles. The X-ray images generated via the radiography scans can be used to check the part(s) for cracks, flaws, and/or defects that may not normally be visible to the human eye.

Limitations and disadvantages of conventional and traditional approaches will become apparent to one of skill in the art, through comparison of such systems with the present disclosure as set forth in the remainder of the present application with reference to the drawings.

### SUMMARY

The present disclosure is directed to systems and methods to automatically develop digital radiography techniques, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of an industrial X-ray radiography machine, in accordance with aspects of this disclosure.
FIG. 2 is a block diagram showing an example X-ray radiography system having the industrial X-ray radiography machine of FIG. 1, in accordance with aspects of this disclosure.
FIGS. 3A-3D illustrate portions of an example user interface that may be presented by the systems of FIGS. 1 and/or 2 to guide a user through an automatic determination of one or more digital radiography parameters of a digital radiography technique.
FIGS. 4A-4B illustrate portions of another example user interface that may be presented by the systems of FIGS. 1 and/or 2 to guide a user through an automatic determination of one or more digital radiography parameters of a digital radiography technique.
FIGS. 5 illustrate portions of an example user interface that may be presented by the systems of FIGS. 1 and/or 2 to guide a user through an automatic determination of one or more digital radiography parameters of a digital radiography technique.
FIG. 6 is a flowchart representative of example machine readable instructions which may be executed by the example radiography systems of FIGS. 1 and/or 2 to automatically develop a digital radiography technique.
FIG. 7 is a flowchart representative of example machine readable instructions which may be executed by the example radiography systems of FIGS. 1 and/or 2 to determine characteristics of a radiography specimen for automatic development of a digital radiography technique.
FIG. 8 is a flowchart representative of example machine readable instructions which may be executed by the example radiography systems of FIGS. 1 and/or 2 to determine one or more radiography parameters based on gray values in image(s) of an image quality indicator, for automatic development of a digital radiography technique.
FIG. 9 is a flowchart representative of example machine readable instructions which may be executed by the example radiography systems of FIGS. 1 and/or 2 to determine specimen positioning based on image(s) of an image quality indicator, for automatic development of a digital radiography technique.
FIG. 10 is a flowchart representative of example machine readable instructions which may be executed by the example radiography systems of FIGS. 1 and/or 2 to determine specimen positioning based on image(s) of an image quality indicator, for automatic development of a digital radiography technique.
FIG. 11 is a flowchart representative of example machine readable instructions which may be executed by the example radiography systems of FIGS. 1 and/or 2 to automatically calculate the radiographic view locations for a digital radiography technique.

The figures are not necessarily to scale. Where appropriate, the same or similar reference numerals are used in the figures to refer to similar or identical elements. For example, reference numerals utilizing lettering (e.g., radiography system 100a, radiography system 100b) refer to instances of the same reference numeral that does not have the lettering (e.g., radiography systems 100).

### DETAILED DESCRIPTION

Conventionally, industrial digital radiography involves controlling or adjusting multiple aspects of the radiography system and/or the specimen to be imaged. Because specimens can vary widely in characteristics such as inner and/or outer dimensions and materials, radiography parameters and arrangements are generally not transferrable between different specimens. Devices having known and/or verified dimensions, such as image quality indicators (IQIs), may be used by an operator to assist with determining appropriate parameters and/or arrangements of the digital radiography system and/or specimen. However, conventional industrial digital radiography technique development remains a largely manual process that relies on experience to efficiently and effectively prepare the system to obtain satisfactory images for a given specimen.

Disclosed systems and methods automatically determine parameters and/or arrangements of a digital radiography system for radiographic imaging of a target specimen. In some examples, disclosed systems and methods use inputted and/or automatically determined characteristics of a target specimen, and one or more images of an IQI, to automatically determine one or more parameters for control of a radiography emitter, a radiography detector, and/or a radiography stage. In some examples, a baseline set of parameters may be used to inform the automatic determination of the parameters to obtain a recommended digital radiography technique even faster.

Example parameters of a digital radiography technique that may be automatically determined using disclosed systems and methods include emitter voltage, emitter current, detector frame rate, detector frame averaging, detector pixel gain, detector mode, focal distance, and/or geometric magnification. In some examples, disclosed systems and methods permit an operator to modify one or more parameters of a recommended technique.

Disclosed examples may provide different levels of automation of radiography technique development. Some examples provide a guided technique development, in which an operator is prompted to provide inputs regarding specimen characteristics and/or interpret initial or test radiographs to identify a region containing an IQI, which are then used by disclosed example systems and methods to automatically determine and/or recommend parameters. Some examples provide an assisted technique development, in which an operator is prompted to provide inputs regarding specimen characteristics and disclosed systems and methods automatically determine and/or recommend parameters from a radiograph containing an IQI. Still other examples provide an automated technique development, which may involve determining specimen characteristics from a computer model of the specimen, capture a radiographic image of the IQI, and automatically determine and/or recommend the parameters from the automatically determined characteristics and the radiographic image.

As used herein, an "image" or "radiographic image" refers to a digital radiographic image, or digital radiograph, unless otherwise specified.

According to aspects of this disclosure, example digital radiography systems include: a radiation detector configured to generate a digital image based on incident radiation; a radiation emitter configured to emit radiation toward the radiation detector; a stage configured to hold a radiography specimen; and control circuitry configured to: automatically determine one or more parameters for control of one or more of the radiation emitter or the radiation detector, the one or more parameters being automatically determined based on a characteristic of the radiography specimen and an image of an image quality indicator; and control the radiation detector and the radiation emitter to generate a digital radiograph of the radiography specimen based on the one or more parameters.

In some example digital radiography systems, the control circuitry is configured to determine the characteristic of the radiography specimen based on a user input to a user interface. In some example digital radiography systems, the characteristic of the radiography specimen comprises at least one of a specimen material or a known dimension of the radiography specimen.

In some example digital radiography systems, the control circuitry is configured to control the radiation detector and radiation emitter to capture the image of the image quality indicator based on capturing a first radiography image and determining a region in which the image quality indicator is present. In some example digital radiography systems, the control circuitry is configured to determine the region based on a user input to a user interface. In some example digital radiography systems, the control circuitry is configured to automatically determine the region based on an image analysis of the first radiography image to detect the image quality indicator.

In some example digital radiography systems, the control circuitry is configured to determine at least one of an emitter voltage or an emitter current based on comparing a gray value range of the image quality indicator in the image to one or more predetermined gray value thresholds.

In some example digital radiography systems, the control circuitry is configured to determine a lower geometric magnification limit based on the image and based on a target image quality, the control circuitry configured to control at least one of a position of the stage, a position of the radiation emitter, or a position of the radiation detector, based on the determined target geometric magnification. In some example digital radiography systems, the control circuitry is configured to determine a size, in pixels, of a predetermined target hole of the image quality indicator in the image, and determine the target geometric magnification that results in the digital radiograph of the predetermined target hole being at least a threshold number of pixels in size. In some example digital radiography systems, control circuitry is configured to determine an upper magnification limit based on an upper unsharpness limit.

In some example digital radiography systems, the control circuitry is configured to determine an emitter current based on comparing a contrast-to-noise-ratio in the image of the image quality indicator to a threshold contrast-to-noise-ratio. In some example digital radiography systems, the control circuitry is configured to, in response to determining that the emitter current is at an upper limit and the contrast-to-noise-ratio is less than a threshold contrast-to-noise-ratio, modify at least one of a frame rate of the detector or frame averaging by the detector. In some example digital radiography systems, the control circuitry is configured to access a model of the radiography specimen and determine the characteristic of the radiography specimen based on the model. In some example digital radiography systems, the control circuitry is configured to automatically determine the one or more parameters based on one or more previously defined values for one or more of one or more parameters.

According aspects of this disclosure, example methods to develop a digital radiography technique involve: automatically determining, using control circuitry, one or more parameters for control of a radiation emitter and a radiation detector of a digital radiography system based on a characteristic of the radiography specimen and an image of an image quality indicator; and controlling, using the control circuitry, the radiation detector and the radiation emitter to generate a digital radiograph of the radiography specimen based on the determined one or more parameters.

Some example methods further involve receiving, via a user interface, a user input specifying the characteristic of the radiography specimen. Some example methods further involve capturing a first radiography image and determining a region in which the image quality indicator is present. In some example methods, determining the region involves receiving a user input via a user interface, in which the user input defines the region of the first radiography image in which the image quality indicator is present. In some example methods, determining the region involves automatically determining the region based on an image analysis of the first radiography image to detect the image quality indicator.

In some example methods, automatically determining the plurality of parameters involves determining at least one of an emitter voltage or an emitter current based on comparing a gray value range of the image quality indicator in the image to one or more predetermined gray value thresholds.

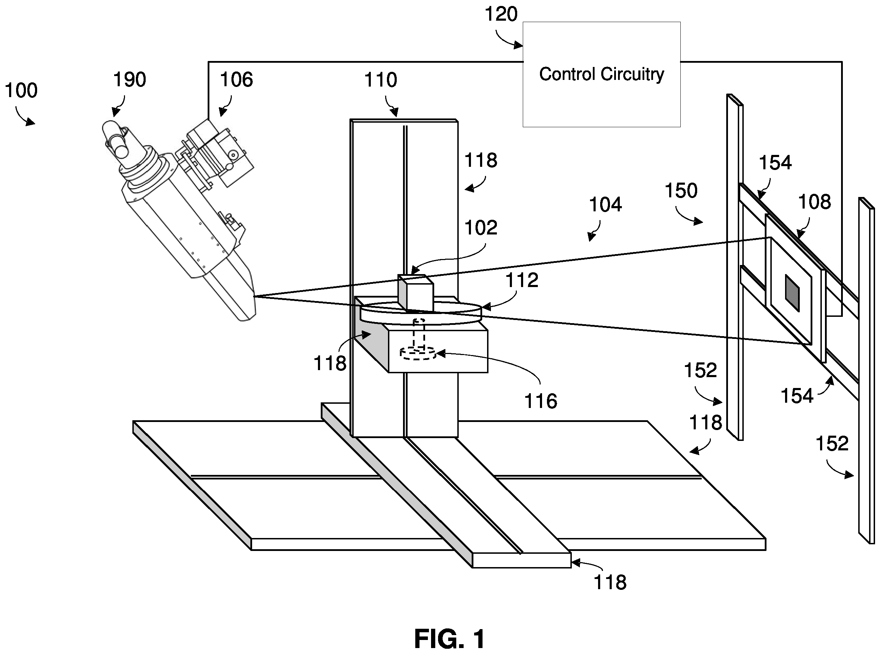

FIG. 1 shows an example industrial X-ray digital radiography system 100. In some examples, the X-ray digital radiography system 100 may be used to perform non-destructive testing (NDT), digital radiography (DR) scans, computerized tomography (CT) scans, and/or other applications on a specimen 102. In some examples, the specimen 102 may be an industrial component and/or an assembly of components (e.g., an engine cast, microchip, bolt, etc.). In some examples, the specimen 102 may be relatively small, such that a finer, more detailed, higher resolution radiography (e.g., radiographic imaging) process may be useful. While primarily discussed in terms of X-rays for the sake of simplicity, in some examples, the X-ray digital radiography systems 100 discussed herein may use radiation in other wavelengths (e.g., Gamma, Neutron, etc.).

In the example of FIG. 1, the X-ray digital radiography system 100 directs X-ray radiation from an X-ray emitter 106 along a radiation path 104. The emitted radiation proceeds along the radiation path 104, passes through the specimen 102, and subsequently impacts (and/or is detected by) an X-ray detector 108. In some examples, the X-ray emitter 106 may comprise an X-ray tube configured to emit cone or fan shaped X-ray radiation. In some examples, the X-ray emitter 106 may emit X-ray radiation within an energy range of 20 kiloelectron volts (keV) to 10 megaelectron volts (MeV).

In some examples, two dimensional (2D) digital radiographs (e.g., radiographic images, X-ray images, etc.) may be generated based on the X-ray radiation 104 incident on the X-ray detector 108. In some examples, the 2D radiographs may be generated by the X-ray detector 108 itself. In some examples, the 2D radiographs may be generated by the X-ray detector 108 in combination with a control circuitry 120 in communication with the X-ray detector 108 and/or X-ray digital radiography system 100.

In some examples, the 2D radiographs generated by the X-ray detector 108 (and/or associated computing system(s)) may be combined to form three dimensional (3D) radiographic volumes and/or images. In some examples, 2D image slices of the 3D volumes/images may also be formed. While the term "image" and/or "radiograph" is used herein as a shorthand, it should be understood that an "image" and/or "radiograph" may comprise representative data until that data is visually rendered by one or more appropriate components (e.g., a display screen, a graphic processing unit, an X-ray detector 108, etc.).

In some examples, the X-ray detector 108 may comprise a flat panel detector (FDA), a linear diode array (LDA), and/or a lens-coupled scintillation detector. In some examples, the X-ray detector 108 may comprise a fluoroscopy detection system and/or a digital image sensor configured to receive an image indirectly via scintillation. In some examples, the X-ray detector 108 may be implemented using a sensor panel (e.g., a charge coupled device (CCD) panel, a complementary metal-oxide-semiconductor (CMOS) panel, etc.) configured to receive the X-rays directly, and to generate the digital images. In some examples, the X-ray detector 108 may include a scintillation layer/screen that absorbs X-rays and emits visible light photons that are, in turn, detected by a solid-state detector panel (e.g., a CMOS X-ray panel and/or CCD X-ray panel) coupled to the scintillation screen.

In some examples, the X-ray detector 108 (e.g., the solid state detector panel) may include detector pixels. In some examples, the detector pixels may correspond to portions of a scintillation screen. In some examples, the size of each detector pixel may range from tens to hundreds of micrometers. In some examples, the pixel size of the X-ray detector 108 may be in the range of 25 micrometers to 250 micrometers (e.g., 200 micrometers). In some examples, the detector pixels may be arranged in a detector pixel grid on the X-ray detector 108.

In the example of FIG. 1, the X-ray digital radiography system 100 includes a positioning system 199 comprising a stage 110, a detector positioner 150, and an emitter positioner 190. In some examples, the detector positioner 150 is configured to move the X-ray detector 108 to different detector positions. As shown, the detector positioner 150 includes two parallel pillars 152 connected by two parallel rails 154. As shown the X-ray detector 108 is retained on the rails 154. In some examples, the X-ray detector 108 may be retained on (and/or attached to) the rails 154 by one or more intermediary supports.

In some examples, the detector positioner 150 may be configured to move the X-ray detector 108 along the rails 154 toward and/or away from either pillar 152. In some examples, the rails 154 may be configured to move (e.g., up and/or down) along and/or parallel to the pillars 152, thereby also moving the X-ray detector 108 along and/or parallel to the pillars 152. While illustrated simply in the example of FIG. 1, in some examples, the detector positioner 150 may be more complex, similar to the x translation stage 18, y translation stage 20, detector mounting frame 26, and/or x/y stage linear encoders 22/24 shown and described in U.S. Patent No. 9,459,217, entitled "High-Resolution Computed Tomography," and having a § 371 date of September 30, 2015, the entire contents of which are hereby incorporated by reference. However, in other examples, the detector positioner 150 may be implemented using other types of positioners or manipulators.

In some examples, the specimen 102 may be moved by a stage 110 or other sample positioner (e.g., a robotic arm manipulator, etc.). The stage 110 may be configured to move and/or rotate the sample in one, two, or three linear dimensions (e.g., X, Y, and/or Z) and/or one, two, or three rotational directions (e.g., yaw, tilt, roll). In the example of FIG. 1, the stage 110 retains the specimen 102 in the path of the X-ray radiation 104, between the X-ray emitter 106 and detector 108. In some examples, the stage 110 may be configured to move the specimen 102 towards and/or away from the X-ray emitter 106 and/or X-ray detector 108, thereby changing the geometric magnification (defined as the distance between the X-ray emitter 106 and the X-ray detector 108 divided by the distance between the X-ray emitter 106 and the specimen 102). In some examples, the stage 110 may be configured to move and/or rotate the specimen 102 so that a desired portion and/or orientation of the specimen 102 is located in the path of the X-ray radiation 104. In some examples, the stage 110 may position the specimen 102 at different angles/orientations with respect to the X-ray emitter 106 and/or X-ray detector 108 in order to obtain 2D radiographs 500a at different orientations, which may then be used to generate one or more three dimensional (3D) images of the specimen 102. Additionally or alternatively, the X-ray emitter 106 and/or the X-ray detector 108 are coupled to a positioner or manipulator (e.g., a robotic arm manipulator, etc.) to allow for linear and/or rotational movement of the X-ray emitter 106 and/or the X-ray detector 108 with respect to the stage 110 and the specimen 102.

In the example of FIG. 1, the stage 110 includes a rotatable fixture 112 upon which the specimen 102 is positioned. As shown, the rotatable fixture 112 is a circular plate. As shown, the rotatable fixture 112 is attached to a motorized spindle 116, through which the rotatable fixture 112 may be rotated about an axis defined by the spindle 116. In some examples, one or more alternative and/or additional rotation mechanisms may be provided.

In the example of FIG. 1, the rotatable fixture 112 is supported by a support structure 118. In some examples, the support structure 118 may be configured to translate the rotatable fixture 112 (and/or the specimen 102) toward and/or away from the X-ray emitter 106 and/or the X-ray detector 108. In some examples, the support structure 118 may include one or more actuators configured to impart the translation(s).

While one example stage 110 is shown in the example of FIG. 1, in some examples a different sample positioner may be used. For example, a robotic object positioner may be used to translate and/or rotate the specimen 102. Likewise, while shown as a circular plate in the example of FIG. 1, in some examples, the rotatable fixture 112 may instead comprise a different fixture, such as, for example, a clamp, clasp, gripper, and/or other retention mechanism. In some examples, the X-ray emitter 106 and the X-ray detector 108 may instead be rotated around the specimen 102, rather than (or in addition to) the specimen 102 being rotated by the rotatable fixture 112 (as might be helpful if the specimen 102 is cumbersome, for example).

In some examples, the detector positioner 150 and/or the emitter positioner 190 may instead be differently implemented, such as via a platform built into a floor of the X-ray digital radiography system 100, one or more robotic movers, a conveyor, and/or one or more other appropriate means. In some examples, the detector positioner 150 and the emitter positioner 190 may be configured for rotation around a different (e.g., horizontal, diagonal, etc.) axis, with the X-ray emitter 106 and/or the X-ray detector 108 repositioned accordingly.

In some examples, one or more portions of the stage 110 and/or the support structure 118 may be altered and/or omitted to facilitate use (e.g. line of sight) of the X-ray emitter 106 and the X-ray detector 108 when moved around the specimen 102 by the detector positioner 150 and the emitter positioner 190. In some examples, the detector positioner 150 and the emitter positioner 190 may be configured to maintain the same geometric magnification of the X-ray digital radiography system 100 when moving the X-ray emitter 106 and the X-ray detector 108 around the specimen 102. While much of this disclosure discusses rotating the specimen 102, in some examples, the X-ray emitter 106 and the X-ray detector 108 may instead be rotated around the specimen 102, as discussed above.

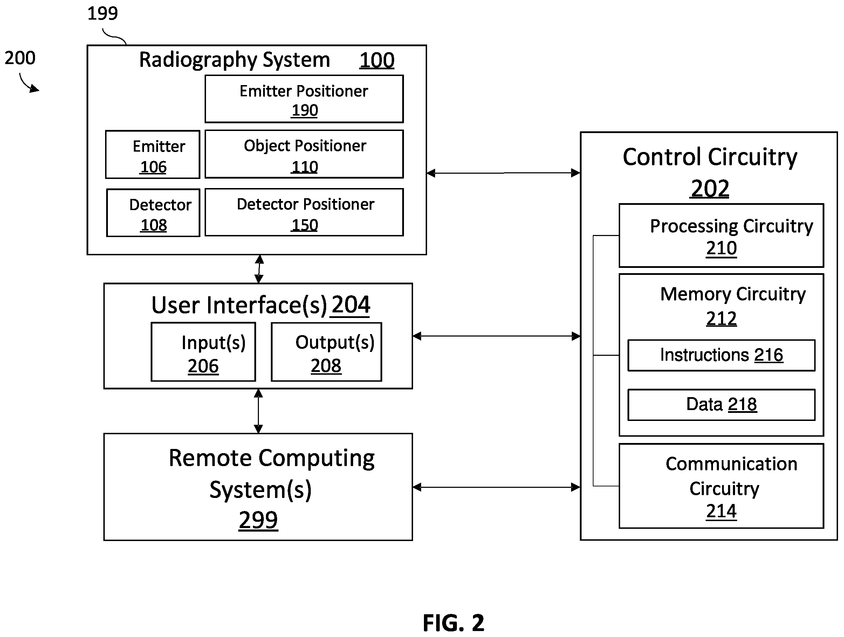

FIG. 2 shows an example of an X-ray digital radiography system 200 that includes an X-ray digital radiography system 100, such as, for example, the X-ray digital radiography system 100 shown in FIG. 1. As shown, the X-ray digital radiography system 200 also includes a control circuitry 202, a user interface (UI) 204, and a remote computing system 299. While only one X-ray digital radiography system 100, control circuitry 202, UI 204, and remote computing system 299 are shown in the example of FIG. 2, in some examples the X-ray digital radiography system 200 may include several X-ray digital radiography systems 100, control circuitry 202, Uls 204, and/or remote computing systems 299.

In the example of FIG. 2, the X-ray digital radiography system 100 has an emitter 106, detector 108, and positioning system (comprising the stage 110, an emitter positioner 190, and the detector positioner 150) enclosed within a housing. As shown, the X-ray digital radiography system 100 is connected to and/or in communication with the control circuitry 202 and UI(s) 204. In some examples, the X-ray digital radiography system 100 may also be in electrical communication with the remote computing system(s) 299. In some examples, the communications and/or connections may be electrical, electromagnetic, wired, and/or wireless.

In the example of FIG. 2, the UI 204 includes one or more input devices 206 and/or output devices 208. In some examples, the one or more input devices 206 may comprise one or more touch screens, mice, keyboards, buttons, switches, slides, knobs, microphones, dials, and/or other electromechanical input devices. In some examples, the one or more output devices 208 may comprise one or more display screens, speakers, lights, haptic devices, and/or other devices. In some examples, a user may provide input to, and/or receive output from, the X-ray digital radiography system 100, control circuitry 202, and/or remote computing system(s) 299 via the UI(s) 204.

In some examples, the UI(s) 204 may be part of the control circuitry 202. In some examples, the control circuitry 202 may implement one or more controllers of the X-ray digital radiography system 100, such as the control circuitry 120 of FIG. 1. In some examples, the control circuitry 202 together with the UI(s) 204 may comprise an image acquisition system of the X-ray digital radiography system 200. In some examples, the remote computing system(s) 299 may be similar or identical to the control circuitry 202.

In the example of FIG. 2, the control circuitry 202 is in (e.g., electrical) communication with the X-ray digital radiography system 100, UI(s) 204, and remote computing system(s) 299. In some examples, the communication may be direct communication (e.g., through a wired and/or wireless medium) or indirect communication, such as, for example, through one or more wired and/or wireless networks (e.g., local and/or wide area networks). As shown, the control circuitry 202 includes processing circuitry 210, memory circuitry 212, and communication circuitry 214 interconnected with one another via a common electrical bus.

In some examples, the processing circuitry 210 may comprise one or more processors. In some examples, the communication circuitry 214 may include one or more wireless adapters, wireless cards, cable adapters, wire adapters, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the communication circuitry 214 may be configured to facilitate communication via one or more wired media and/or protocols (e.g., Ethernet cable(s), universal serial bus cable(s), etc.) and/or wireless mediums and/or protocols (e.g., near field communication (NFC), ultra high frequency radio waves (commonly known as Bluetooth), IEEE 802.11x, Zigbee, HART, LTE, Z-Wave, WirelessHD, WiGig, etc.).

In operation, the control circuitry 202 controls the radiography system 100 based on parameters of the emitter 106 (e.g., X-ray tube voltage, X-ray tube current), parameters of the detector 108 (e.g., detector frame rate, detector frame averaging, detector pixel gain, detector mode), and/or positioning or arrangement aspects (e.g., focal distance, geometric magnification). Prior to performing a radiography operation, the radiography system 100 undergoes a qualification process to determine values for the parameters that will result in radiography images that will be useful (e.g., adequately show features of at least the desired size with sufficient contrast for visual and/or automatic identification). To improve the speed of the qualification process, the example control circuitry 202 controls the user interface 204 and/or the radiography system 100 to automatically determine or recommend some or all of the parameters to be used.

In some examples, the control circuitry 202 provides a guided interface via the user interface 204. The guided interface may instruct the operator to provide information such as the specimen material (e.g., steel, aluminum, etc.), a thickness of the specimen, and/or a desired image quality (e.g., 1-T, 2-T, 4-T, etc.). The control circuitry 202 may further request that the operator place an IQI on the stage 110 within the field of view of the detector 108, and/or indicate a region containing the IQI within an initial image of the IQI.

In disclosed examples, an IQI includes one or more components which are visible in a radiograph of the IQI, and which have one or more known dimensions which are also visible in a radiograph of the IQI. The known dimension of interest may be referred to as a "target hole size," which is based on a target image quality for a given specimen. The target image quality may define one or more thresholds for spatial resolution, image resolution, unsharpness, gray value contrast, contrast-to-noise ratio, and/or other image characteristics that affect manual and/or automated evaluation of the resulting digital radiographs. IQls are typically constructed in conformance with one or more national or international standards for qualifying radiographs and/or radiograph techniques. In some examples, an IQI may be combined into a same tool or component with other calibration devices, such as contrast-to-noise-ratio (CNR) tools. Such combination tools allow for more rapid analyses and recommendations for parameter values.

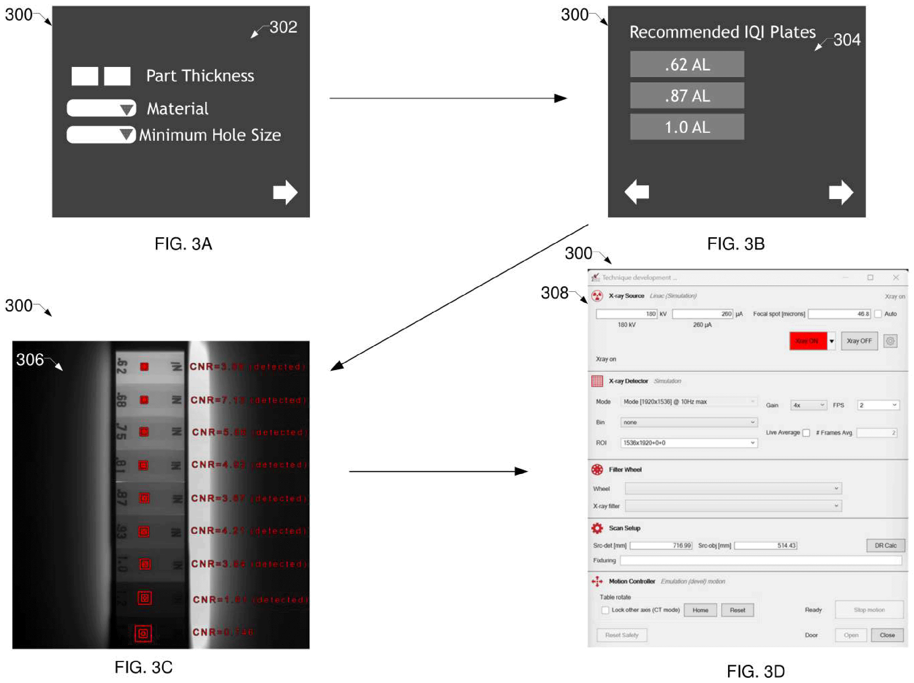

FIGS. 3A illustrates a first screen 302 of an example user interface 300 that may be presented by the X-ray digital radiography systems 100 of FIGS. 1 and/or 2 to guide a user through an automatic determination of one or more digital radiography parameters of a digital radiography technique. The example first screen 302 may be presented to the user in response to a selection of a technique development selection. The first screen 302 directs the user to input a thickness of the specimen (or part), a material type, and/or a known dimension, such as a minimum hole size of an IQI or other dimension representative of the desired image quality.

FIG. 3B illustrates a second screen 304 of the example user interface 300, which presents one more recommended IQls based on the characteristics input into the first screen 302. The control circuitry 202 may recommend one or more IQls having one or more dimensions based on the target image quality (e.g., a known dimension, such as a target hole size of the IQI).

The screen 304 may direct the user to place one or more IQIs onto the stage 110 for obtaining a preliminary image. The user may acknowledge that the IQI is placed, at which time the control circuitry 202 controls the emitter 106 and the detector 108 to obtain an initial image (e.g., a test image, a preliminary image) using a first set of parameters. In some examples, the user interface 300 may enable the operator to enter parameters defining a baseline technique. The control circuitry 202 may use the baseline technique for the initial image. In other examples, the initial image is obtained using a predetermined set of test parameters.

FIG. 3C illustrates the user interface 300 showing a portion of the initial image 306 including the IQI. In some examples, the user interface 204 requests the user to input the region of interest from the initial image, in which the region of interest contains the image of the IQI.

The example IQI is a step/hole-type of image quality indicator, including multiple sections. Each section has a different thickness and a plate. The plate has one or more defined holes, which have corresponding diameters which are a predetermined proportion to the thickness of the section. Example holes may be defined as 1-T (e.g., hole diameter is 1% of the section thickness), 2-T (e.g., hole diameter is 2% of the section thickness), and/or 4-T (e.g., diameter is 4% of the section thickness).

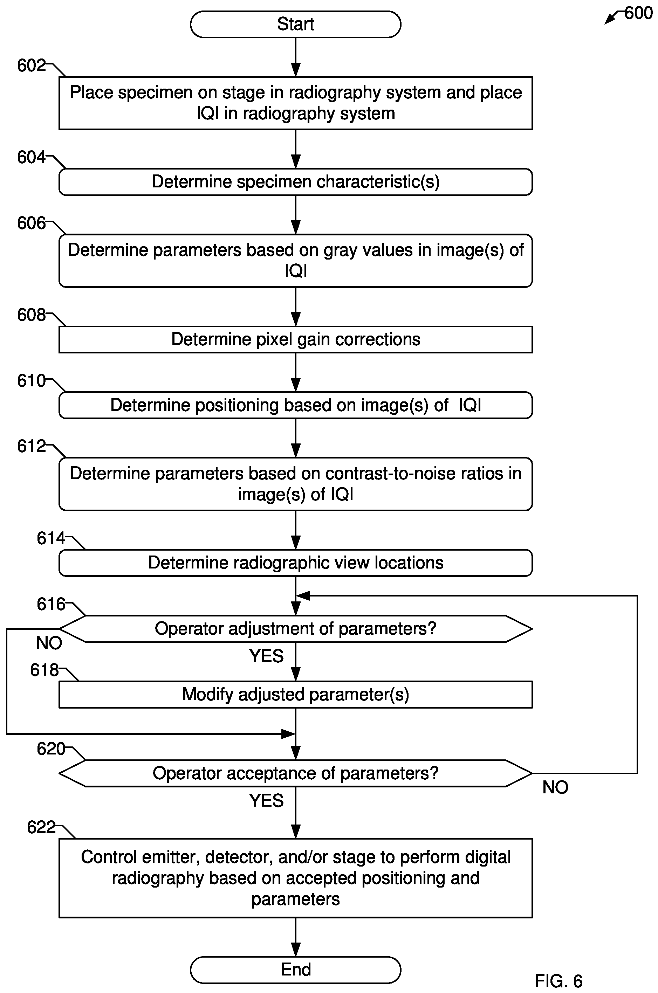

Using the initial image 308, the example control circuitry 202 automatically determines one or more recommended parameters to obtain an image of the specimen having sufficient or even optimal quality. Example machine readable instructions to automatically determine the one or more recommended parameters are disclosed below with reference to FIGS. 6-10.

FIG. 3D illustrates the user interface 300 showing a recommended set of parameters automatically determined by the control circuitry 202 based on the initial image of the IQI. Based on the IQI and the specimen characteristics, the example control circuitry 202 may determine and/or adjust parameters including parameters of the emitter 106 (e.g., X-ray tube voltage, X-ray tube current), parameters of the detector 108 (e.g., detector frame rate, detector frame averaging, detector pixel gain, detector mode), and/or positioning or arrangement aspects (e.g., focal distance, geometric magnification). In some examples, the automatic determination may involve iteratively capturing multiple images of the IQI and adjusting ones of the parameters until the desired image quality is obtained.

When the recommended parameters are identified, the operator may elect to accept the recommended parameters or adjust one or more of the parameters. When the operator accepts the recommended and/or adjusted parameters, the control circuitry 202 controls the emitter 106, the detector 108, and/or the stage 110 to obtain one or more digital radiographs of the specimen based on the accepted parameters.

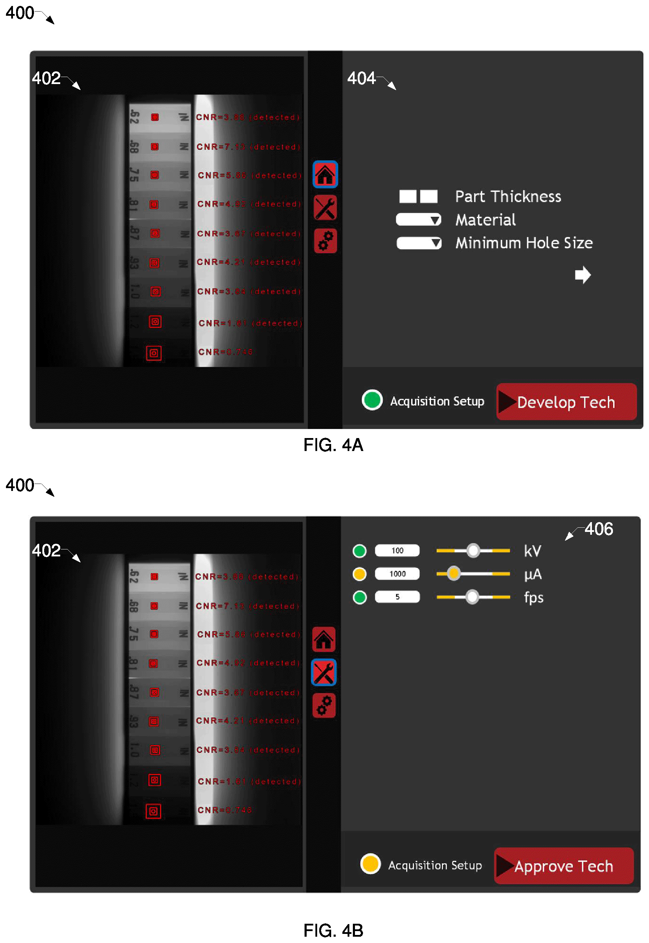

FIGS. 4A-4B illustrate portions of another example user interface 400 that may be presented by the X-ray digital radiography systems 100, 200 of FIGS. 1 and/or 2 to guide a user through an automatic determination of one or more digital radiography parameters of a digital radiography technique. In contrast with the example interface 300 of FIGS. 3A-3D, the user interface 400 further automates the development of the digital radiography technique by reducing the amount of user input.

FIG. 4A illustrates the user interface 400 showing an initial image 402 of the IQI and an input portion 404 to enable the operator to enter characteristics of the specimen. Prior to displaying the image 402 and the input portion 404, the control circuitry 202 obtains a digital radiograph of the IQI (e.g., placed on the stage 110 by the operator) and automatically determines the portion of the initial image containing the IQI. For example, the control circuitry 202 may user one or more image analysis (e.g., machine vision) techniques to locate the IQI within the initial image.

The input portion 404 may be similar to the first screen 302 of the interface 300, and permits the operator to enter a specimen thickness, a material type, and/or a known dimension.

Using the initial image 402, the example control circuitry 202 automatically determines one or more recommended parameters to obtain an image of the specimen having sufficient or even optimal quality. Example machine readable instructions to automatically determine the one or more recommended parameters are disclosed below with reference to FIGS. 6-10.

FIG. 4B illustrates the user interface 400 showing the initial image 402 (or a subsequent image captured during the automatic determination of the parameters), and a parameter adjustment portion 406. The example inputs 408a-408c may be pre-configured by the control circuitry 202 with recommended values of the corresponding parameters, which are then adjustable by the operator if desired. The example parameter adjustment portion 406 includes inputs 408a-408c which permit an operator to adjust corresponding radiography parameters, such as a tube voltage input 408a, a tube current input 408b, and a frame rate input 408c. However, more, fewer, or alternative parameters may be presented.

When the operator is satisfied with the parameters, the operator may accept the technique and the control circuitry 202 obtains one or more digital radiographs of the specimen using the accepted parameters.

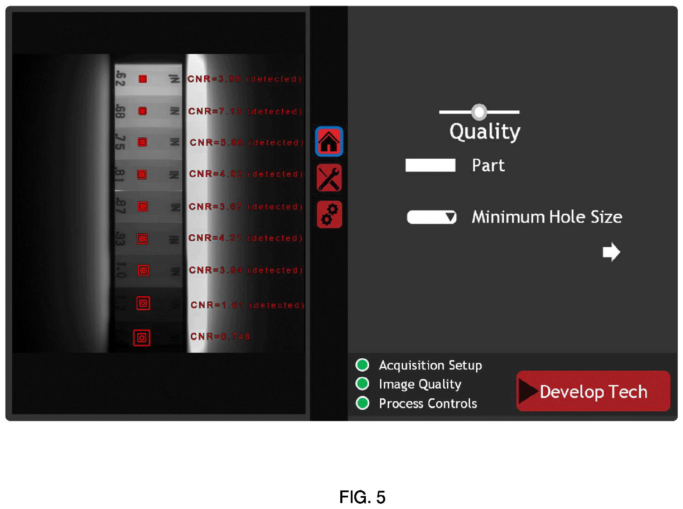

FIG. 5 illustrates another example user interface 500 that may be presented by the X-ray digital radiography systems 100, 200 of FIGS. 1 and/or 2 to guide a user through an automatic determination of one or more digital radiography parameters of a digital radiography technique. In the example of FIG. 5, the control circuitry 202 may further automate the development of the digital radiography technique to reduce user inputs.

The example interface 500 shows an initial image 502 of the IQI and an input portion 504 to enable the operator to enter characteristics of the specimen. Prior to displaying the image 502 and the input portion 504, the control circuitry 202 obtains a digital radiograph of the IQI (e.g., placed on the stage 110 by the operator) and automatically determines the portion of the initial image containing the IQI. For example, the control circuitry 202 may user one or more image analysis (e.g., machine vision) techniques to locate the IQI within the initial image.

The input portion 504 may be similar to the first screen 302 of the interface 300 and/or the input portion 404 of FIG. 4A, and permits the operator to provide a computer aided drafting (CAD) or other design data file representative of the specimen to be radiographed. The example control circuitry 202 may process the CAD file to determine one or more characteristics of the specimen, such as a thickness of one or more regions to be imaged, a material of the specimen, and/or one or more known dimensions that may determine the recommended or required quality of the digital radiography images. Additionally or alternatively, the input portion 504 may allow the operator to input or adjust the known dimension and/or the required quality.

When the initial image 502 and the specimen characteristics have been automatically obtained, the operator may select to automatically develop the digital radiography technique. In response, the example control circuitry 202 automatically determines one or more recommended parameters, using the initial image 502 and the automatically determined characteristic(s), to obtain an image of the specimen having sufficient or even optimal quality. Example machine readable instructions to automatically determine the one or more recommended parameters are disclosed below with reference to FIGS. 6-10.

FIG. 6 is a flowchart representative of example machine readable instructions 600 which may be executed by the example radiography systems 100, 200 of FIGS. 1 and/or 2 to automatically develop a digital radiography technique. The instructions 600 may be performed using the digital radiography system 100 of FIG. 2 and/or by the control circuitry 120, 202 of FIGS. 1 and/or 2.

At block 602, the operator places a specimen 102 (e.g., a part to be radiographed) on the stage 110 of the radiography system 100, and places an IQI in the radiography system 100 (e.g., on the stage 110, next to the specimen, etc.).

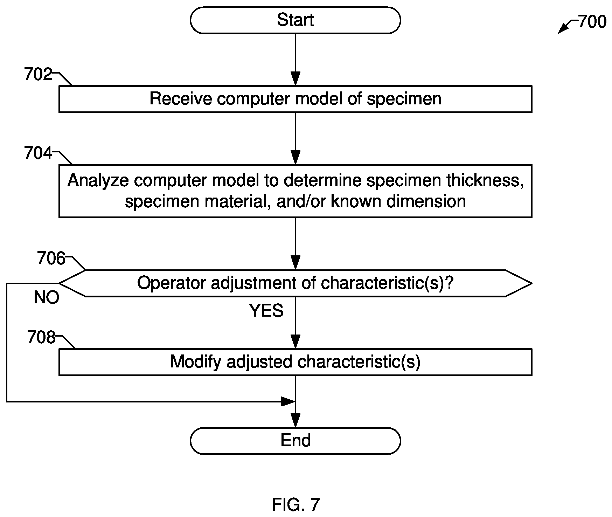

At block 604, the control circuitry 202 determines one more characteristics of the specimen 102. The control circuitry 202 may determine the characteristic(s) using operator input and/or automatically based on a CAD design file or other data. For example, the operator may input characteristics such as specimen thickness, specimen material, and/or a known dimension of the IQI via the first screen 302 of the interface 300 of FIG. 3 and/or via the input portion 404 of the user interface 400 of FIG. 4. Example instructions that may implement block 604 to automatically determine characteristics of the specimen are described below with reference to FIG. 7.

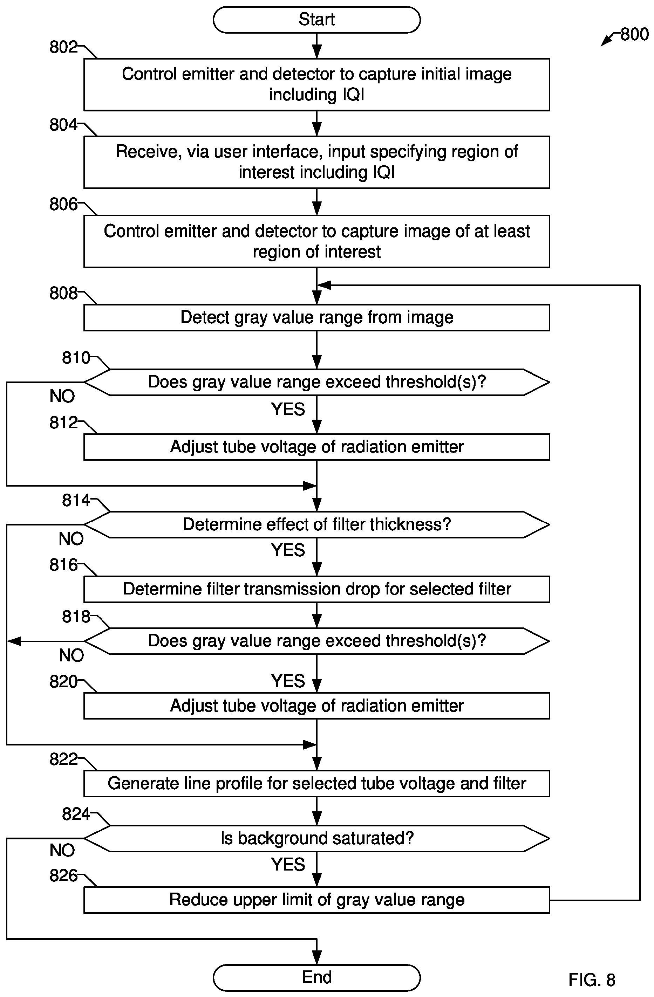

At block 606, the control circuitry 202 determines one or more parameter(s) based on gray values in one or more image(s) of the IQI. Block 606 may involve capturing one or more images of the IQI, and determining parameters based on the image(s). In some examples, the images and determination may be performed iteratively. Example instructions that may implement block 606 are described below with reference to FIG. 8.

At block 608, the example control circuitry 202 determines pixel gain corrections for the detector 108. In some examples, the control circuitry 202 controls the stage 110, the detector 108, and/or the emitter 106 to move the specimen 102 out of the path 104 of the radiation (e.g., to provide unobstructed radiation to the detector 108). The control circuitry 202 then controls the emitter 106 and the detector 108 to capture one or more blank field images, which may be captured at one or more tube voltages and/or tube currents. Using the blank field images, the control circuitry 202 may calculate pixel gain corrections to provide consistent pixel values for different pixels for the same radiation.

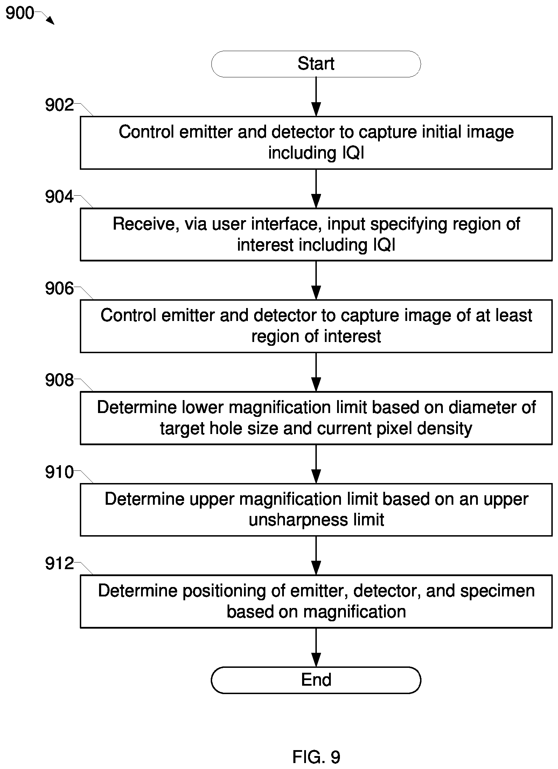

At block 610, the control circuitry 202 determines recommended positioning of the emitter 106, the detector 108, and/or the specimen (e.g., the stage 110) based on the image(s) of the IQI. For example, the control circuitry 202 may determine a lower limit of geometric magnification to achieve at least a threshold spatial resolution. For example, the control circuitry 202 may determine, from the image of the IQI, a geometric magnification required to have the lower limit IQI hole size be at least a threshold number of pixels in size. Based on the geometric magnification, the control circuitry 202 determines relative positions of the emitter 106, the detector 108, and/or the stage 110. Example instructions that may implement block 610 are described below with reference to FIG. 9.

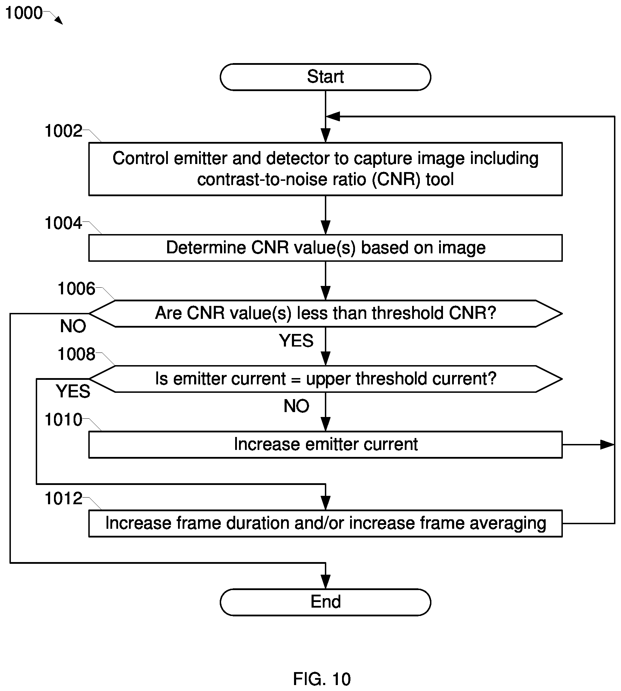

At block 612, the control circuitry 202 determines one or more parameters based on contrast-to-noise ratio(s) (CNR) in the image(s) of the IQI. For example, the control circuitry 202 may determine whether the CNR of the image(s) of the IQI has at least a threshold CNR value (e.g., 2.5). If the CNR is not at least the threshold value, the control circuitry 202 may adjust parameters such as the tube current, detector frame rate, and/or detector frame averaging to increase the CNR. Example instructions that may implement block 612 are described below with reference to FIG. 10.

At block 614, the
At block 616, the control circuitry 202 may present the determined parameter(s) (e.g., via the user interface 204) and determine whether any operator adjustments are received. If any parameters are adjusted by the operator (block 616), at block 618 the control circuitry 202 modifies the adjusted parameters according to the operator input. After modifying the parameters (block 618), or if modifications have not been received (block 616), at block 620 the control circuitry 202 determines whether the operator has accepted the parameters. If the operator has not accepted the parameters (block 620), control returns to block 614.

If the operator has not accepted the parameters (block 620), at block 622 the control circuitry 202 controls the emitter 106, the detector 108, and the stage 110 to perform digital radiography based on the accepted (e.g., baseline, automatically determined, and/or adjusted) positioning and parameters. For example, the control circuitry 202 may control the positioning of the emitter 106, the detector 108, and/or the stage 110 to achieve the acceptable and/or optimal geometric magnification, gray value range, CNR, and/or any other desired markers of image quality. The example instructions 600 may then end.

FIG. 7 is a flowchart representative of example machine readable instructions 700 which may be executed by the example radiography systems 100, 200 of FIGS. 1 and/or 2 to determine characteristics of a radiography specimen for automatic development of a digital radiography technique. The example instructions 700 may be performed by the example control circuitry 120, 202 of FIGS. 1 and/or 2 to implement block 604 of FIG. 6.

At block 702, the control circuitry 202 receives a computer model representative of the specimen to be radiographed. Example computer models include CAD design files. The operator may upload the computer model of the specimen to the control circuitry 202 from a computer readable medium, and/or instruct the control circuitry 202 to access the computer model of the specimen from a remote computing system (e.g., a server) via a communications network.

At block 704, the control circuitry 202 analyzes the computer model to determine the specimen thickness and/or the specimen material. The control circuitry 202 may further determine a known dimension, such as a lower limit IQI hole size, based on the dimensions of the specimen determined from the computer model.

At block 706, the control circuitry 202 determines whether one or more characteristics have been adjusted by the operator. For example, the control circuitry 202 may present the automatically determined characteristics via the user interface 204, and permit the operator to change any of the characteristics. If the operator has adjusted one or more characteristic(s) (block 706), at block 708 the control circuitry 202 modifies the adjusted characteristics according to the operator adjustment.

After modifying the characteristic(s) (block 708), or if no adjustment has occurred (e.g., the operator accepted the determined characteristics) (block 706), the example instructions 700 may end and return control to block 606 of FIG. 6.

FIG. 8 is a flowchart representative of example machine readable instructions which may be executed by the example radiography systems 100, 200 of FIGS. 1 and/or 2 to determine one or more radiography parameters based on gray values in image(s) of an image quality indicator, for automatic development of a digital radiography technique. The example instructions 800 may be performed by the example control circuitry 120, 202 of FIGS. 1 and/or 2 to implement block 606 of FIG. 6.

At block 802, the control circuitry 202 controls the emitter 106 and the detector 108 to capture an initial image including the IQI. For example, the control circuitry 202 may use a predefined baseline set of parameters for the initial image. The predefined baseline may be entered by the operator, retrieved from a prior technique based on a similar specimen, and/or a default baseline technique.

At block 804, the control circuitry 202 receives, via the user interface 204, input specifying the region of interest including the IQI. For example, the operator may draw a box or other shape around the region of interest displayed of the initial image in the user interface 204. In some other examples, the control circuitry 202 may automatically detect the region of interest using image analysis techniques, such as machine vision.

At block 806, the control circuitry 202 controls the emitter 106 and the detector 108 to capture a radiographic image of at least the region of interest using preliminary parameters. The preliminary parameters may be the predefined baseline parameters, or a different baseline set of parameters. In some other examples, the control circuitry 202 uses the region of interest in the initial image for subsequent analysis, to the exclusion of other portions of the radiographic image not within the region of interest.

At block 808, the control circuitry 202 detects a gray value range from the radiographic image. For example, the control circuitry 202 determines the highest gray value and the lowest gray value present in the radiographic image. In some examples, the control circuitry 202 applies a line profile, histogram, value analysis, and/or other processing to the image (e.g., a line profile at the location(s) of the holes in the IQI in the radiographic image).

At block 810, the control circuitry 202 determines whether the gray value range exceeds a threshold range. For example, the gray value range may include a lower gray value threshold and/or an upper gray value threshold. The lower gray value threshold and/or the upper gray value threshold may be selected to provide a sufficient or optimal image quality, such as a lower gray value threshold of 10% and an upper gray value threshold of 75%.

If whether the gray value range exceeds the threshold range (block 810), at block 812 the control circuitry 202 adjusts a tube voltage of the emitter 106. For example, the control circuitry 202 adjusts the tube voltage of the emitter 106 based on the gray value range relative to the threshold range. For example, if the lowest gray value is less than the lower gray value threshold, the control circuitry 202 may adjust the tube voltage of the emitter 106. Conversely, if the lowest gray value and the highest gray value are both higher than the respective lower and upper gray value thresholds, the control circuitry 202 may reduce the tube voltage of the emitter 106. The adjustment may be a set increment, an increase or decrease based on a model of tube voltage and observed gray value ranges, and/or an amount based on a difference between the lowest gray value and the lower gray value threshold.

After adjusting the tube voltage (block 812), or if the gray value range does not exceed the threshold(s) (block 810), at block 814 the control circuitry 202 determines whether an effect of filter thickness is to be determined. In some examples, the control circuitry 202 determines a filter to be applied based on the tube voltage of the emitter 106 and/or the specimen characteristics, such as to obtain a desired beam hardening. In some examples, the filter is selected by the operator based on, for example, the specimen to be radiographed.

If the effect of filter thickness is to be determined (block 814), at block 816 the control circuitry 202 determines a filter transmission drop for the selected filter. The control circuitry 202 may determine the transmission drop based on standard tables such as the National Institute of Standards and Technology (NIST) table of X-Ray Mass Attenuation Coefficients (NIST Standard Reference Database 126, July 2004).

Based on the filter transmission drop, at block 818 the control circuitry 202 determines whether the gray value range exceeds the threshold(s). Block 818 may be similar to block 810, except that the determination may further take into account the effects of the filter transmission drop on the gray values. If the calculated gray value range exceeds the threshold(s) (block 818), at block 820 the control circuitry 202 adjusts the tube voltage of the emitter 106 to compensate for filter transmission drop, such as by increasing the tube voltage to cause the gray values to be within the threshold range.

After adjusting the tube voltage (block 820), if the gray value range does not exceed the threshold range (block 818), or if the effect of filter thickness is not to be determined (block 814), at block 822 the control circuitry 202 generates a line profile of the initial radiographic image for the selected tube voltage and filter. In some other examples, the line profile may be replaced or supplemented by a histogram, a maximum gray value, or other analysis.

Based on the line profile, at block 824 the control circuitry 202 determines whether the background of the radiographic image would be saturated. In some examples, the control circuitry 202 may obtain another radiographic test image of the IQI using the adjusted tube voltage and the selected filter to perform an analysis on the additional test image.

If the background is determined to be saturated (block 824), at block 826 the control circuitry 202 reduces an upper gray value threshold of the gray value threshold range, and control returns to block 808. In other examples, control may return to block 806 to capture another radiographic image.

If the background is determined to not be saturated (block 824), the example instructions 800 end and return control to block 608 of FIG. 6.

FIG. 9 is a flowchart representative of example machine readable instructions which may be executed by the example radiography systems 100, 200 of FIGS. 1 and/or 2 to determine specimen positioning based on image(s) of an image quality indicator, for automatic development of a digital radiography technique. The example instructions 900 may be performed by the example control circuitry 120, 202 of FIGS. 1 and/or 2 to implement block 610 of FIG. 6 to determining positioning of the emitter 106, the detector 108, and/or the stage 110.

At block 902, the control circuitry 202 controls the emitter 106 and the detector 108 to capture an initial image including the IQI. For example, the control circuitry 202 may use a predefined baseline set of parameters for the initial image. The predefined baseline may be entered by the operator, retrieved from a prior technique based on a similar specimen, and/or a default baseline technique.

At block 904, the control circuitry 202 receives, via the user interface 204, input specifying the region of interest including the IQI. For example, the operator may draw a box or other shape around the region of interest displayed of the initial image in the user interface 204. In some other examples, the control circuitry 202 may automatically detect the region of interest using image analysis techniques, such as machine vision.

At block 906, the control circuitry 202 controls the emitter 106 and the detector 108 to capture a radiographic image of at least the region of interest using preliminary parameters. The preliminary parameters may be the predefined baseline parameters, or a different baseline set of parameters. In some other examples, the control circuitry 202 uses the region of interest in the initial image for subsequent analysis, to the exclusion of other portions of the radiographic image not within the region of interest.

In some examples, blocks 902, 904, and/or 906 may be omitted by using the initial radiographic image (or subsequent radiographic images) obtained while performed blocks 802-806 (e.g., as an implementation of block 604 of FIG. 6).

At block 908, the control circuitry 202 determines a lower magnification limit based on the diameter of the target hole size and a current pixel density. For example, the control circuitry 202 may determine a size, in pixels, of the target hole size from the initial image of the IQI. As an example, if the target thickness is 1.0 and the required image quality is 2-2T, the control circuitry 202 may determine that the geometric magnification is required to be at least a threshold magnification using Equation (1) below: $Mag = \frac{4.25 ∗ SRb}{{D}_{2 - 2 T}}$ Equation (1)

In Equation (1), Mag is the lower geometric magnification limit, SRb is the spatial resolution of the detector 108, and D_{2-2T} is the diameter of the target hole size (e.g., the 2-2T hole). D_{2-2T} may be replaced with a diameter of another hole for a different target hole size. Additionally or alternatively, the factor of 4.25 may be modified based on the number of pixels to be fit within the target hole size.

In some examples, instead of using the target hole size on the IQI, the control circuitry 202 may use a predetermined and/or arbitrary area of interest in the image having a known physical size. The predetermined and/or arbitrary area of interest may be a portion of the specimen, which may have a size determined from the computer model of the part or a measurement by the operator.

At block 910, the control circuitry 202 determines a upper magnification limit based on an upper unsharpness limit. For example, as the magnification increases, the unsharpness of the resulting radiographic images also increase. The upper unsharpness limit may be determined based on the specimen characteristics, a target image quality, and/or an operator preference. The control circuitry 202 may use Equation (2) to determine an upper magnification limit based on a defined upper unsharpness. $Mag = \frac{Ug}{Focal Spot} + 1$ Equation (2)

In Equation (2), Ug is the unsharpness (e.g., an unsharpness limit), and "Focal Spot" is the size of the focal spot of the emitter 106 (e.g., a value determined based on the tube current). The control circuitry 202 defines a workable range of the magnification using the lower magnification limit (block 908) and the upper magnification limit (block 910). In some examples, the control circuitry 202 may display the workable range to the operator to allow the operator to adjust the magnification (and the positioning of the specimen) within the workable range.

At block 912, the control circuitry 202 determines the positioning of the emitter 106, the detector 108, and the specimen (e.g., the stage 110) based on the determined magnification. For example, the control circuitry 202 may determine a positioning of the stage 110 for a emitter 106 and a detector that are a predetermined or fixed distance apart. The example instructions 900 may then end and return control to block 612 of FIG. 6.

FIG. 10 is a flowchart representative of example machine readable instructions 1000 which may be executed by the example radiography systems 100, 200 of FIGS. 1 and/or 2 to determine specimen positioning based on image(s) of an image quality indicator, for automatic development of a digital radiography technique. The example instructions 1000 may be performed by the example control circuitry 120, 202 of FIGS. 1 and/or 2 to implement block 612 of FIG. 6 to determine parameters based on CNRs in the image(s) of the IQI.

At block 1002, the control circuitry 202 controls the emitter 106 and the detector 108 to capture an image including a CNR tool or CNR calibration target. An example CNR tool complies with ASTM E2737 and/or ASTM E2698, and may include multiple steps or sections having different thicknesses. In some examples, the IQI may also be a CNR tool, such as by combining the IQI onto the CNR tool. The control circuitry 202 may use a predefined baseline set of parameters for the image of the CNR tool, and/or may use the parameters that were previously determined at block 606 and/or block 610. A predefined baseline may be entered by the operator, retrieved from a prior technique based on a similar specimen, and/or a default baseline technique.

At block 1004, the control circuitry 202 determines CNR values based on the radiographic image of the CNR tool. The CNR values may be determined for the different sections of the CNR tool. Example CNR measurements determined for the sections of the example IQI are illustrated in FIGS. 3C, 4B, and 5.

At block 1006, the control circuitry 202 determines whether the CNR values are less than a threshold CNR value. An example threshold CNR value is 2.5, and is selected to represents a CNR that provides a sufficient, or even optimal, image quality for the radiographic imaging of the specimen. In some examples, the control circuitry 202 may limit the CNR values that are compared to a subset of thicknesses or sections. The subset may be predetermined and/or based on the characteristics of the specimen.

If any of the CNR values are less than a threshold CNR value (block 1006), at block 1008 the control circuitry 202 determines whether a tube current of the emitter 106 is at an upper threshold current. The upper threshold current may be the upper limit of the tube current of the emitter 106, or may be set to a lower current. If tube current of the emitter 106 is at an upper threshold current (block 1008), at block 1010 the control circuitry 202 increases the tube current of the emitter 106. The control circuitry 202 may increase the tube current by a predetermined increment or based on a difference between the lowest CNR value and the threshold CNR value.

If the tube current is at the upper threshold current (block 1008), at block 1012 the control circuitry 202 increases a frame duration and/or frame averaging of the detector 108. After increasing the tube current (block 1008) or increasing the frame duration and/or frame averaging of the detector 108 (block 1010), control then returns to block 1002 to obtain another radiographic image using the updated tube current or frame duration and/or frame averaging for evaluation of the CNR.

When the CNR values are at least the threshold (block 1006), the example instructions 1000 end and return control to block 614 of FIG. 6.

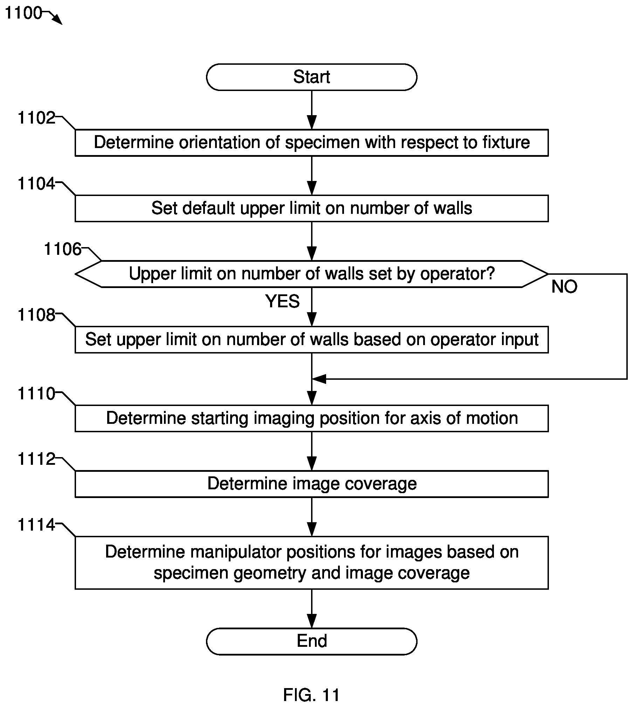

FIG. 11 is a flowchart representative of example machine readable instructions 1100 which may be executed by the example radiography systems 100, 200 of FIGS. 1 and/or 2 to automatically calculate the radiographic view locations for a digital radiography technique. The example instructions 1100 may be performed by the example control circuitry 120, 202 of FIGS. 1 and/or 2 to implement block 614 of FIG. 6 to calculate the radiographic view locations.

At block 1102, the example control circuitry 202 determines an orientation of the specimen 102 with respect to the fixture 112. For example, the position and orientation of the fixture 112 with respect to the support structure 118 (and, therefore, the X-ray emitter 106 and the X-ray detector 108) are determinable by the control circuitry 202 based on, for example, position sensors coupled to the fixture 112 and/or the support structure 118. In some examples, the computer model for the specimen and a computer model of the fixture 112 may be loaded and combined to provide an arrangement of the specimen 102 and the fixture.

At block 1104, the control circuitry 202 sets a default upper limit on a number of walls through which the radiographic views are taken. The upper limit on the number of walls is used to determine an initial radiographic view and/or may be imposed as a limit on all of the radiographic views. At block 1106, the control circuitry 202 determines whether an upper limit on the number of walls has been set by the operator. For example, the user interface 204 may allow an operator to specify the upper limit on a number of walls in multi-wall analysis. If the operator has set an upper limit on the number of walls (block 1106), at block 1108 the control circuitry 202 sets the upper limit on a number of walls through which the radiographic views are taken based on the operator input.

After setting the upper limit (block 1108), or if the upper limit has not been set by the operator (block 1106), at block 1110 the control circuitry 202 determines a starting imaging position for a given axis of motion. For example, the control circuitry 202 may determine a starting imaging position for axis of motion by minimizing material thickness and/or minimizing a number of walls in the radiographic view at the starting imaging position. In an example, if the specimen 102 has up to 4 walls that could be radiographed in a single view, but the user selects a lower upper limit of walls (e.g., 2 walls), the control circuitry 202 adjusts the radiographic views and the corresponding movements of the fixture 112 to position the specimen 102, the X-ray source 106, and/or the X-ray detector 108 to reduce or eliminate radiographic views through more than 2 walls in the specimen. By limiting the number of walls to a lower limit, the control circuitry 202 may determine an increased number of radiographic views to scan the specimen 202. Conversely, by increasing an upper limit on the number of walls, the control circuitry 202 may determine a lower number of radiographic views to scan the specimen 202.

In some other examples, the control circuitry 202 determines a starting imaging position by calculating the model area and/or by determining simple inputs of a radius and height of the specimen 102 to determine a surface area and an initial radiographic view. In some examples, the control circuitry 202 determines a surface area of the specimen 102 from the computer model, which may be used in combination with the coverage to determine a number and positioning of radiographic views to scan the specimen 102. In some other examples, the operator may input basic dimensions, such as a radius and height of an envelope of the specimen 102, to determine the radiographic views.

At block 1112, the control circuitry 202 determines a coverage of each radiographic view. As used herein, coverage refers to an area of the specimen 202 that is imaged in a given radiographic view. The example control circuitry 202 determines the coverage of the radiographic views. Based on the model area (e.g., from the computer model and/or from simple radius and height), the geometry of the specimen 102, the panel size, and the suggested geometric magnification determined as disclosed above, For example, the control circuitry 202 may determine the coverage according to Equation (3) below: $Coverage = \frac{Panel size}{GeoMag} \left(Panel Overlap %\right)$ Equation (3)

In Equation (3), the panel size refers to a dimension of a detector panel of the X-ray detector 108, GeoMag refers to the geometric magnification, and Panel Overlap % refers to a percentage of the pixels of the detector panel that are overlapped when performing image stitching and/or overlap between adjacent images. In some examples, the coverage may be calculated separately for each dimension of the X-ray detector (e.g., height and width).

At block 1114, the control circuitry 202 determines manipulator positions for the images based on the specimen geometry (e.g., surface area) and the image coverage. In some examples, the control circuitry 202 determines the radiographic views, and the corresponding positioning and/or orientation(s) of the specimen 102, the emitter 106, and/or the detector 108 to image the surface area of the specimen 102. For example, the control circuitry 202 may determine the angular positions to which the fixture 112 is to be rotated and positions of the X-ray detector 108 to obtain a number of radiographic views of the specimen 102 determined to balance the number of views of the specimen 102 to provide a desired scan quality without incurring excess views that increase a scan time. The angular positions of the fixture 112 may include rotation of the fixture 112 about one or more rotational axes and/or one or more tilting axes (e.g., via the stage 110). The control circuitry 202 may output, for example, a set of manipulator position commands and corresponding commands to the X-ray source 106 and/or the X-ray detector 108. The determined radiographic views and corresponding manipulator position commands may be based on the geometry of the specimen 102 and/or limitations of the fixture 112.

The example instructions 1100 may then end and return control to block 616 of FIG. 6.

The present methods and/or systems may be realized in hardware, software, or a combination of hardware and software. The present methods and/or systems may be realized in a centralized fashion in at least one computing system, or in a distributed fashion where different elements are spread across several interconnected computing and/or remote computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more instructions (e.g., lines of code) executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A digital radiography system, comprising:
   a radiation detector configured to generate a digital image based on incident radiation;
   a radiation emitter configured to emit radiation toward the radiation detector;
   a stage configured to hold a radiography specimen; and
   control circuitry configured to:
      automatically determine one or more parameters for control of one or more of the radiation emitter or the radiation detector, the one or more parameters being automatically determined based on a characteristic of the radiography specimen and an image of an image quality indicator; and
      control the radiation detector and the radiation emitter to generate a digital radiograph of the radiography specimen based on the one or more parameters.
Clause 2. The digital radiography system as defined in clause 1, wherein the control circuitry is configured to determine the characteristic of the radiography specimen based on a user input to a user interface.
Clause 3. The digital radiography system as defined in clause 2, wherein the characteristic of the radiography specimen comprises at least one of a specimen material or a known dimension of the radiography specimen.
Clause 4. The digital radiography system as defined in clause 1, wherein the control circuitry is configured to control the radiation detector and radiation emitter to capture the image of the image quality indicator based on capturing a first radiography image and determining a region in which the image quality indicator is present.
Clause 5. The digital radiography system as defined in clause 4, wherein the control circuitry is configured to determine the region based on a user input to a user interface.
Clause 6. The digital radiography system as defined in clause 4, wherein the control circuitry is configured to automatically determine the region based on an image analysis of the first radiography image to detect the image quality indicator.
Clause 7. The digital radiography system as defined in clause 1, wherein the control circuitry is configured to determine at least one of an emitter voltage or an emitter current based on comparing a gray value range of the image quality indicator in the image to one or more predetermined gray value thresholds.
Clause 8. The digital radiography system as defined in clause 1, wherein the control circuitry is configured to determine a lower geometric magnification limit based on the image and based on a target image quality, the control circuitry configured to control at least one of a position of the stage, a position of the radiation emitter, or a position of the radiation detector, based on the determined target geometric magnification.
Clause 9. The digital radiography system as defined in clause 8, wherein the control circuitry is configured to determine a size, in pixels, of a predetermined target hole of the image quality indicator in the image, and determine the target geometric magnification that results in the digital radiograph of the predetermined target hole being at least a threshold number of pixels in size.
Clause 10. The digital radiography system as defined in clause 8, wherein the control circuitry is configured to determine an upper magnification limit based on an upper unsharpness limit.
Clause 11. The digital radiography system as defined in clause 1, wherein the control circuitry is configured to determine an emitter current based on comparing a contrast-to-noise-ratio in the image of the image quality indicator to a threshold contrast-to-noise-ratio.
Clause 12. The digital radiography system as defined in clause 1, wherein the control circuitry is configured to, in response to determining that the emitter current is at an upper limit and the contrast-to-noise-ratio is less than a threshold contrast-to-noise-ratio, modify at least one of a frame rate of the detector or frame averaging by the detector.
Clause 13. The digital radiography system as defined in clause 1, wherein the control circuitry is configured to access a model of the radiography specimen and determine the characteristic of the radiography specimen based on the model.
Clause 14. The digital radiography system as defined in clause 1, wherein the control circuitry is configured to automatically determine the one or more parameters based on one or more previously defined values for one or more of one or more parameters.
Clause 15. A method to develop a digital radiography technique, the method comprising:
   automatically determining, using control circuitry, one or more parameters for control of a radiation emitter and a radiation detector of a digital radiography system based on a characteristic of the radiography specimen and an image of an image quality indicator; and
   controlling, using the control circuitry, the radiation detector and the radiation emitter to generate a digital radiograph of the radiography specimen based on the determined one or more parameters.
Clause 16. The method as defined in clause 15, further comprising receiving, via a user interface, a user input specifying the characteristic of the radiography specimen.
Clause 17. The method as defined in clause 15, further comprising capturing a first radiography image and determining a region in which the image quality indicator is present.
Clause 18. The method as defined in clause 17, wherein determining the region comprises receiving a user input via a user interface, the user input defining the region of the first radiography image in which the image quality indicator is present.
Clause 19. The method as defined in clause 17, wherein determining the region comprises automatically determining the region based on an image analysis of the first radiography image to detect the image quality indicator.
Clause 20. The method as defined in clause 15, wherein the automatically determining the plurality of parameters comprises determining at least one of an emitter voltage or an emitter current based on comparing a gray value range of the image quality indicator in the image to one or more predetermined gray value thresholds.

## Claims

1. A digital radiography system, comprising:
a radiation detector configured to generate a digital image based on incident radiation;
a radiation emitter configured to emit radiation toward the radiation detector;
a stage configured to hold a radiography specimen; and
control circuitry configured to:
automatically determine one or more parameters for control of one or more of the radiation emitter or the radiation detector, the one or more parameters being automatically determined based on a characteristic of the radiography specimen and an image of an image quality indicator; and
control the radiation detector and the radiation emitter to generate a digital radiograph of the radiography specimen based on the one or more parameters.

2. The digital radiography system as defined in claim 1, wherein the control circuitry is configured to determine the characteristic of the radiography specimen based on a user input to a user interface.

3. The digital radiography system as defined in claim 1 or claim 2, wherein the characteristic of the radiography specimen comprises at least one of a specimen material or a known dimension of the radiography specimen.

4. The digital radiography system as defined in any one of claims 1 to 3, wherein the control circuitry is configured to control the radiation detector and radiation emitter to capture the image of the image quality indicator based on capturing a first radiography image and determining a region in which the image quality indicator is present.

5. The digital radiography system as defined in claim 4, wherein the control circuitry is configured to determine the region based on a user input to a user interface, and/or
wherein the control circuitry is configured to automatically determine the region based on an image analysis of the first radiography image to detect the image quality indicator.

6. The digital radiography system as defined in any one of claims 1 to 5, wherein the control circuitry is configured to determine at least one of an emitter voltage or an emitter current based on comparing a gray value range of the image quality indicator in the image to one or more predetermined gray value thresholds.

7. The digital radiography system as defined in any one of claims 1 to 6, wherein the control circuitry is configured to determine a lower geometric magnification limit based on the image and based on a target image quality, the control circuitry configured to control at least one of a position of the stage, a position of the radiation emitter, or a position of the radiation detector, based on the determined target geometric magnification.

8. The digital radiography system as defined in claim 7, wherein the control circuitry is configured to determine a size, in pixels, of a predetermined target hole of the image quality indicator in the image, and determine the target geometric magnification that results in the digital radiograph of the predetermined target hole being at least a threshold number of pixels in size, and/or
wherein the control circuitry is configured to determine an upper magnification limit based on an upper unsharpness limit.

9. The digital radiography system as defined in any one of claims 1 to 8, wherein the control circuitry is configured to determine an emitter current based on comparing a contrast-to-noise-ratio in the image of the image quality indicator to a threshold contrast-to-noise-ratio, and optionally
wherein the control circuitry is configured to, in response to determining that the emitter current is at an upper limit and the contrast-to-noise-ratio is less than a threshold contrast-to-noise-ratio, modify at least one of a frame rate of the detector or frame averaging by the detector.

10. The digital radiography system as defined in any one of claims 1 to 9, wherein the control circuitry is configured to access a model of the radiography specimen and determine the characteristic of the radiography specimen based on the model, and/or
wherein the control circuitry is configured to automatically determine the one or more parameters based on one or more previously defined values for one or more of one or more parameters.

11. A method to develop a digital radiography technique, the method comprising:
automatically determining, using control circuitry, one or more parameters for control of a radiation emitter and a radiation detector of a digital radiography system based on a characteristic of the radiography specimen and an image of an image quality indicator; and
controlling, using the control circuitry, the radiation detector and the radiation emitter to generate a digital radiograph of the radiography specimen based on the determined one or more parameters.

12. The method as defined in claim 11, further comprising receiving, via a user interface, a user input specifying the characteristic of the radiography specimen.

13. The method as defined in claim 11 or claim 12, further comprising capturing a first radiography image and determining a region in which the image quality indicator is present.

14. The method as defined in claim 13, wherein determining the region comprises receiving a user input via a user interface, the user input defining the region of the first radiography image in which the image quality indicator is present, and/or
wherein determining the region comprises automatically determining the region based on an image analysis of the first radiography image to detect the image quality indicator.

15. The method as defined in any one of claims 11 to 14, wherein the automatically determining the plurality of parameters comprises determining at least one of an emitter voltage or an emitter current based on comparing a gray value range of the image quality indicator in the image to one or more predetermined gray value thresholds.
